(19) Europäisches Patentamt
European Patent Office
Office européen des brevets

(11) **EP 3 672 253 A1**

(12) **EUROPEAN PATENT APPLICATION**

(43) Date of publication:
**24.06.2020 Bulletin 2020/26**

(51) Int Cl.:
**H04N 19/70** (2014.01)    **H04N 19/577** (2014.01)

(21) Application number: **18306828.7**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **POIRIER, Tangi**
  **35576 Cesson-Sévigné (FR)**

• **GALPIN, Franck**
  **35576 Cesson-Sévigné (FR)**
• **BORDES, Philippe**
  **35576 Cesson-Sévigné (FR)**
• **FRANCOIS, Edouard**
  **35576 Cesson-Sévigné (FR)**

(74) Representative: **Huchet, Anne**
  **InterDigital CE Patent Holdings**
  **20, rue Rouget de Lisle**
  **92130 Issy-les-Moulineaux (FR)**

(54) **METHOD AND APPARATUS FOR PICTURE ENCODING AND DECODING**

(57)    A method for decoding video data is presented. First and second predictors of a current block are obtained. At least a first weight and a second weight are then obtained. The first and second predictors are combined into a single predictor using the obtained first and second weights. To this aim, the first and second weights are converted into weighted prediction weights in the case where the first and second weights are not weighted prediction weights and weighted prediction is used to combine the first and second predictors into the single predictor. The current block is finally reconstructed using the single predictor.

EP 3 672 253 A1

```
                                    ┌─ S10
        ┌──────────────────────────────────────────────┐
        │ Obtaining first and second predictors of a current block │
        └──────────────────────────────────────────────┘
                                    ┌─ S20
        ┌──────────────────────────────────────────────┐
        │    Obtaining a first weight and a second weight    │
        └──────────────────────────────────────────────┘
                                    ┌─ S30
        ┌──────────────────────────────────────────────┐
        │ Combining the first and second predictors into a single │
        │ predictor using the obtained first and second weights, wherein │
        │ in the case where said first and second weights are not │
        │ weighted prediction weights, said first and second weights are │
        │ converted into weighted prediction weights and weighted │
        │ prediction is used to combine the first and second predictors │
        │              into the single predictor               │
        └──────────────────────────────────────────────┘
                                    ┌─ S40
        ┌──────────────────────────────────────────────┐
        │ Reconstructing the current block using the single predictor │
        └──────────────────────────────────────────────┘
```

Figure 9

**Description**

1. TECHNICAL FIELD

At least one of the present embodiments generally relates to a method and a apparatus for picture encoding and decoding, and more particularly, to a method and a apparatus for picture encoding and decoding using bi-prediction.

2. BACKGROUND ART

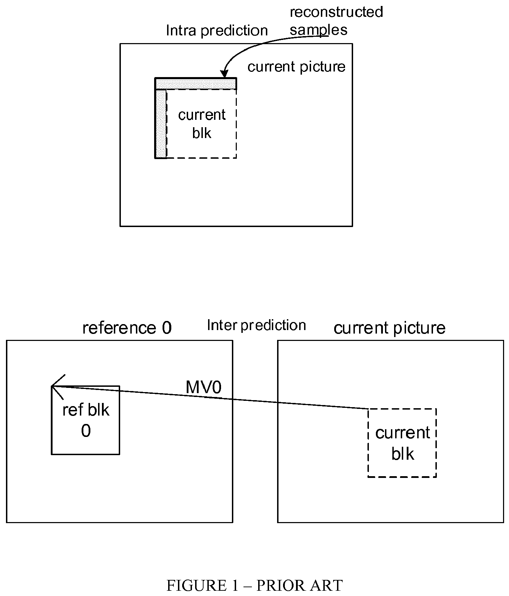

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors, prediction residuals or predictor, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding. In intra mode, the block prediction is computed using reconstructed samples of the current slice or picture (e.g. neighboring samples to the current block) as depicted on top of **Figure 1**. In inter mode, the block prediction is computed from at least on motion compensated (MC) block of one reference picture that was previously reconstructed as depicted in Figure 1 (bottom).

3. BRIEF SUMMARY

According to a general aspect of at least one embodiment, a method for decoding video data is presented. The decoding method comprises:

- obtaining first and second predictors of a current block;
- obtaining at least a first weight and a second weight;
- combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
- reconstructing the current block using the single predictor.

According to a general aspect of at least one embodiment, an apparatus for decoding video data is presented. The apparatus comprises one or more processors configured to perform:

- obtaining first and second predictors of a current block;
- obtaining at least a first weight and a second weight;
- combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
- encoding the current block using the single predictor.

According to a general aspect of at least one embodiment, a method for encoding video data is presented. The encoding method comprises:

- obtaining first and second predictors of a current block;
- obtaining at least a first weight and a second weight;
- combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
- encoding the current block using the single predictor.

According to a general aspect of at least one embodiment, an apparatus for encoding video data is presented. The apparatus comprises one or more processors configured to perform:

- obtaining first and second predictors of a current block;
- obtaining at least a first weight and a second weight;
- combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
- encoding the current block using the single predictor.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

4. BRIEF SUMMARY OF THE DRAWINGS

Figure 1 illustrates intra and inter prediction according to the prior art;
Figures 2 and 3 illustrates determination of illumination compensation parameters based on L-shapes;
Figure 4 depicts a flowchart of a method for determining illumination compensation parameters in case of bi-prediction;
Figure 5 illustrates the determination of illumination compensation (IC) parameters in case of bi-prediction where IC parameters are determined from two reference blocks;
Figures 6, 7A, 7B, 8 and 9 depict flowcharts of a decoding method according to various embodiments;
Figure 10 depicts a flowchart of an encoding method according to an embodiment;
Figure 11 illustrates a block diagram of a video encoder according to an embodiment;
Figure 12 illustrates a block diagram of a video decoder according to an embodiment; and
Figure 13 illustrates a block diagram of an example of a system in which various aspects and embodiments are implemented.

5. DETAILED DESCRIPTION

In HEVC coding, a picture is partitioned into CTUs of square shape with a configurable size typically 64x64, 128x128, or 256x256. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. A CU is composed of several coding blocks (CB), one for each component. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a CU that may be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure.

In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "frame" and "slice" may be used interchangeably. Usually, but not necessarily, the term "reconstructed" is used at the encoder side while "decoded" is used at the decoder side.

In Inter mode, bi-prediction comprises averaging two prediction blocks built as uni-directional motion compensated reference blocks for predicting a current block.

Conventional Bi-prediction

In conventional bi-prediction, two prediction blocks ($Pred_0$ and $Pred_1$) are determined (e.g. using motion compensation) from two reference pictures from lists L0 and L1 respectively. The reference picture used to compute $Pred_0$ has a reference index $ref_0$ and the reference picture used to compute $Pred_1$ has a reference index $ref_1$.

The predictors $Pred_0$ and $Pred_1$ are then combined with fixed equal weights to form a single predictor $Pred_{bi}$. Traditionally, the combination as in (eq. 1) comprises averaging the two predictions:

$$Pred_{bi} = (1/2 * Pred_0[x] + 1/2 * Pred_1[x]) \qquad (1)$$

In a variant, implementation is carried out using integers and shifts as follows:

$$Pred_{bi} = (Pred_0[x] + Pred_1[x] + 1) >> 1$$

where >> is a right shift operator.

Generalized bi-prediction

Generalized Bi-prediction (GBI) is a variant of conventional bi-prediction that allows bi-prediction weights to be transmitted or signaled at the block/CU level. GBI does not apply in uni-directional coding mode. GBI thus comprises weighting the sum of block prediction samples with weights different from (1/2; 1/2) as used in conventional bi-prediction. Therefore, in generalized bi-prediction (GBI), the GBI weights (gw0 and gw1) used for the combination are not necessarily equal to one:

$$Pred_{gbi} = (gw_0.Pred_0[x] + gw_1.Pred_1[x] + off) / (gw_0 + gw_1) \qquad (2)$$

with:

$$off = (gw_0 + gw_1)/2$$

In a variant, (2) is carried out using integers and shifts as follows to ease the implementation:

$$Pred_{gbi} = (gw_0.Pred_0[x] + gw_1.Pred_1[x] + off) >> gs \qquad (3)$$

with:

$$off = 1 << (gs-1)$$

where << is a left shift operator.

The GBI weights gw0 and gw1 may be different. As an example, an index pointing to an entry of a table of GBI weights or more generally to a defined set of GBI weights may be encoded/decoded per block in the case where the block is coded in bi-prediction mode. As an example, **gbi_index** may be encoded/decoded in/from the bitstream for each block and thus identifies the weight value gw1 (gw0 being deduced from gw1 as gw0=(1<<gs)-gw1). The syntax element **gbi_index** is coded using fixed binarization as specified for example in Table 1. Table 1 is known a-priori by both the encoder and decoder and fixed. In table 1, num_gbi=5 and gbi_index= 2 corresponds to the conventional bi-prediction with equal weights (1/2, 1/2) for each one of the two predictions.

Table 1

| GBI Index | Weight value of $w_1$ | $gw_0$ | $gw_1$ | off | gs | Binarization of GBI Index |
|---|---|---|---|---|---|---|
| 0 | -1/4 | 5 | -1 | 2 | 2 | 0000 |
| 1 | 3/8 | 5 | 3 | 4 | 3 | 001 |
| 2 | 1/2 | 1 | 1 | 1 | 1 | 1 |
| 3 | 5/8 | 3 | 5 | 4 | 3 | 01 |
| 4 | 5/4 | -1 | 5 | 2 | 2 | 0001 |

The syntax element gbi_index may be coded/decoded for each block/CU coded in inter bi-prediction as indicated by the example of syntax specified in Table 2.

Table 2

| coding_unit( ) { | Descriptor |
|---|---|
| **mode** | u(1) |
| ... | |
| If (mode == inter_bi) { | |
| if (gbi_enabled_flag && cond_gbi()) | |
| **gbi_index** | See Table-1 |
| **...** | |
| } | |

**gbi_enabled_flag** may be coded/decoded in/from a slice header or pre-defined or inferred from other syntax elements, and indicates whether GBI may apply for CUs of subsequent slices.

In some specific modes (e.g. merge mode), the value of **gbi_index** for a current block may be inferred from the value of **gbi_index** of a neighbor (more precisely from one of the merge candidates) from which the current CU inherits its parameters. The weights may be the same for all the components. "cond_gbi()" corresponds to additional conditions such as GBI being disabled for CU sizes below to a given value for example. Table is an example. Variants may be used. For example, cond_gbi() may be removed from Table 2.

In a variant, several tables (e.g. two tables of the type of Table 1, denoted Table 1.a and 1.b) with different GBI weights and/or number of GBI weights "num_gbi" may be a-priori known and used. For example, the choice of the table to use is function of the POC (Picture Order Count) of the 2 reference pictures (poc0, poc1) and the POC of the current picture (pocCur):

if (poc0 < pocCur && poc1 < pocCur) Table 1.a is used else Table 1.b is used where "x && y" is the boolean logical "and" of x and y.

In an example, one table includes a subset of GBI weights of another table.

Weighted uni-directional prediction and weighted bi-prediction

Weights may also be determined from global Illumination Compensation, also known as "Weighted Prediction" (WP) tool. In this case, the weights are determined by the encoder and are fixed for a whole slice or group of blocks or picture. They may be transmitted in the bitstream, e.g. as a WP table.

The WP allows defining weights and offsets (wi;offi) per slice associated with each component (e.g. "ncomp=3" for YUV or RGB pictures) of each reference picture "i" of each list (L0 and L1) stored in the Decoded Picture Buffer (DPB). The WP may then be applied on the block prediction. For notation simplification, even if different indices may be used for reference lists L0 and L1, "i" may correspond to an index in the reference list L0 that comprises nRef[0] reference pictures, or in the reference list L1 that comprises nRef[1] reference pictures. The WP weights and offsets may be coded in the slice header and are fixed for the slice, so that up to "ncomp x (nRef[0]+nRef[1])" weights and offsets (wi;offi) values are coded. WP can apply in both cases: uni-directional prediction (eq. 4) and bi-prediction (eq. 5). In the case where the current CU is coded/decoded using uni-directional prediction with reference refIdx0 of list L0, one denote (w0;off0) the weight and offset associated with refIdx0. The predictor is determined as follows:

$$\text{Pred'}_0 = ( ( w_0.\text{Pred}_0[x] + (1<<(\text{shift-1})) ) >> \text{shift} ) + \text{off}_0 \qquad (4)$$

In the case where the current CU is coded/decoded using bi-prediction with reference refIdx0 of list L0 and refIdx1 of list L1, one denote (w0;off0) the weight and offset associated with refIdx0 and (w1;off1) the weight and offset associated with refIdx1. The predictor is determined as follows:

$$\text{Pred'}_{01} = ( ( w_0.\text{Pred}_0[x] + w_1.\text{Pred}_1[x] + \text{off}_{01} ) >> (\text{shift}+1) \qquad (5)$$

where

$$\text{off}_{01} = (\text{off}_0 + \text{off}_1 + 1) << \text{shift}$$

where shift is transmitted/coded in the bitstream with the weights.

In HEVC, two flags as mentioned in Table 3 are coded/decoded in the bitstream (e.g. picture parameter set PPS) to indicate whether WP is enabled: one flag (*weighted_pred_flag*) indicates if WP is enabled for uni-directional prediction in P or B slices (eq.4) and another flag (*weighted_bipred_flag*) indicates if WP is enabled for bi-prediction in B slices (eq.5).

Table 3

| pic_parameter_set_rbsp( ) { | Descriptor |
|---|---|
| **pps_pic_parameter_set_id** | ue(v) |
| **pps_seq_parameter_set_id** | ue(v) |
| **...** | |
| **weighted_pred_flag** | u(1) |
| **weighted_bipred_flag** | u(1) |

Local Illumination Compensation

In the Joint Exploration Model (JEM) developed by the JVET (Joint Video Exploration Team) group, additional temporal prediction tools with associated parameters determined at the both encoder and decoder sides were introduced, e.g. Local Illumination Compensation (LIC). The purpose of LIC is to compensate for local illumination change which may occur between a predicted block and its reference block employed through motion compensated temporal prediction.

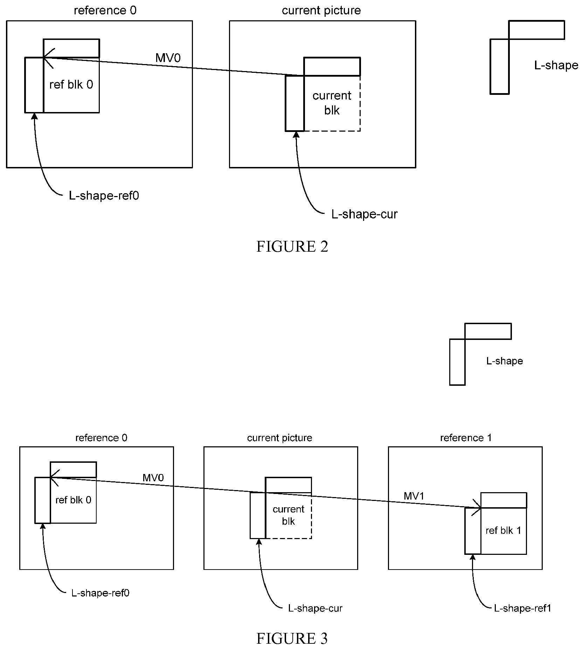

The use of LIC is typically signaled on the CU level, through a flag (LIC flag) associated with each coding unit (CU) coded in inter mode. The LIC flag may be inherited with other parameters in case og "merge" mode for example. According to this tool, the decoder computes some IC parameters associated to IC model based on some reconstructed picture samples, localized on the left and/or on the top of the current block to be predicted and reference picture samples localized on the left and/or on the top of the motion compensated block (**Figure 2**).

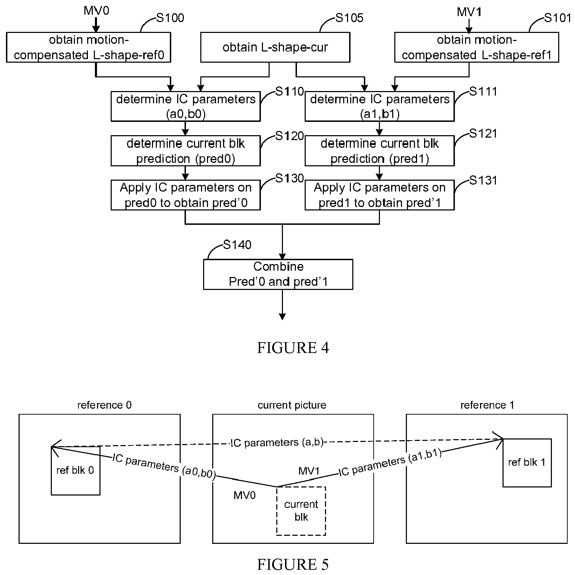

**Figure 4** depicts a flowchart of a method for determining illumination compensation parameters in case of bi-prediction. However, part of the figure may be used to illustrate the determination of illumination compensation parameters in case of uni-directional prediction. The IC parameters are estimated by comparing the set S of reconstructed neighboring samples (L-shape-cur obtained at S105 in **Figure 4**) with the neighboring samples (L-shape-ref-I obtained at S100 in Figure 4) of the reference-i block (i=0 or 1) as depicted in Figure 2. The L-shapes correspond to the left and/or the top of the neighboring samples of one block. The IC parameters are for example determined so as to minimize the difference (e.g. by a least squares method) between the samples in the L-shape-cur and the samples in the L-shape-ref-i corrected with IC parameters. Typically, the IC model is linear: IC(x) = a.x+b, where x is the value of the sample to compensate.

The parameters a and b are determined (S110) by a least square minimization on the L-shapes at the encoder (and at the decoder):

$$(a_i, b_i) = \underset{(a,b)}{\arg\min} \left( \sum_{\substack{x \in L\text{-}shape\text{-}cur, \\ y \in L\text{-}shape\text{-}ref\text{-}i}} (x - a.y - b)^2 \right)$$

Finally, $a_i$ is transformed into integer weight ($a_i$) and shift ($sh_i$) and the motion compensated block determined at S120 is corrected by IC as (S130 in Figure 4):

$$\text{Pred'}_i = (a_i * x_i >> sh_i) + b_i$$

LIC with bi-prediction

**Figure 4** depicts a flowchart of a method for determining illumination compensation parameters in case of bi-prediction. The IC parameters ($a_0, b_0$) and ($a_1, b_1$) are determined independently from *L-shape-ref-0* (S110) and from *L-shape-ref-1* (S111) respectively as illustrated by **Figure 3**. At S140, the two prediction blocks are combined into one bi-prediction, as made conventionally:

$$\text{Bi-pred} = (\text{pred'0} + \text{pred'1} + 1) >> 1 \qquad (eq.7)$$

If sh0=sh1, then (eq.7) can be written as (eq.8):

$$\text{Bi-pred} = (a0 * pred0 + a1 * pred1 + ((b0+b1+1)<<sh01)) >> (sh01+1) \quad (eq.8)$$

where sh01=sh0=sh1.
If sh0 is not equal to sh1 (e.g. sh0<sh1), a0 (or a1 respectivelly) can be multiplied to return to the case sh0=sh1 as follows: e.g. a0 => a0 << (sh1 - sh0).
In a variant, determining the IC parameters in case of bi-prediction is not based on the reconstructed samples neighbors but on the samples (x0, x1) of two motion compensated blocks ref-0 and ref-1. This is done in two steps. First the IC parameters (a,b) between ref-1 and ref-0 are computed classically, except that the set S of samples used are not the L-shape-ref0 and L-shape-cur but the entire block ref-1 and block ref-0. Next, the IC parameters (a0,b0) which compensate Illumination between block ref-0 and the current block, and the IC parameters (a1,b1) which compensate Illumination between block ref-1 and the current block, are both determined from (a,b) (as illustrated **Figure 5**).

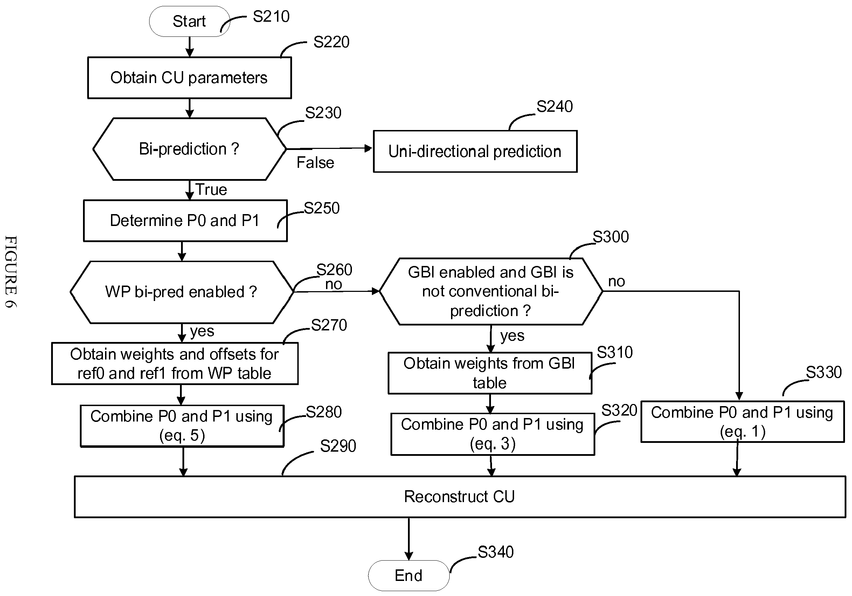

**Figure 6** represents a flowchart of a method for decoding a bi-predicted CU/block from a bitstream according to a specific and non-limiting embodiment.
The method starts at S210. CU parameters are obtained at S220, e.g. motion vectors, reference indices, coding modes, gbi_index, etc. In an embodiment, all parameters associated with a current CU are decoded. In a variant, only a subset of them (e.g. parameter indicating whether the current CU is bi-predicted) is decoded. As an example, High level Syntax (HLS) syntax elements are decoded. Sequence Parameters Set (SPS), Pictures Parameters Set (PPS) and Slice Header (SH) are examples of HLS. In an embodiment, flags gbi_enabled_flag, weighted_pred_flag and weighted_bipred_flag are decoded. In a variant, some of the flags are inferred from other decoded parameters. For example, if current slice is INTRA, then these flags are inferred to false, or if weighted_bipred_flag is true, then gbi_enabled_flag is inferred to false.
At S230, it is checked whether the CU is bi-predicted. If not, the method continues at S240 and uni-directional prediction applies.
In the case where the CU is bi-predicted, predictors P0 and P1 (S250) are determined. The predictor P0 is obtained by motion compensating a first reference block in a first reference image ref0. The predictor P1 is obtained by motion compensating a second reference block in a second reference image ref1. The motion vectors used for the motion compensation are decoded from the bitstream for example at S220.
In the case where WP bi-prediction is enabled (S260), e.g. weighted_bipred_flag is true, weights and offsets for ref0 and ref1 are obtained (S270) from a WP table. A WP table contains the set of weights and offsets to be applied at S280. The WP table associates (weight, offset, shift) values for each reference index "refIdx" of each list L0 and L1 in the DPB. The WP table values can be coded in the bit-stream (e.g. in slice header as in HEVC). At S280, the predictors P0 and P1 are combined into a single predictor using equation 5.
In the case where WP bi-prediction is not enabled (S260), it is checked (S300) whether GBI is enabled, e.g. whether gbi_enabled_flag is true. In the case where GBI is enabled and GBI is not conventional bi-prediction, e.g.

gbi_index is different from 2 if Table 1 is used, GBI weights are obtained (S310) from a GBI table (e.g. Table 1) using gbi_index. The two predictors P0 and P1 are combined into a single predictor (S320) using equation 3 with the GBI weights determined by gbi_index at S310.

In the case where conventional bi-prediction applies (S330), the two predictors P0 and P1 are combined into a single predictor (S330) using equation 1.

At S290, the CU is reconstructed. To this aim, residuals are decoded from the bitstream if not already decoded at S220. The residuals are added to the predictor to obtain the reconstructed CU.

The method ends at step S340.

GBI, WP and LIC (in case of bi-prediction) have similar basic principles since they both modify the prediction samples through linear weighting with weights.

At least one embodiment proposes to make these tools co-exist properly in the codec. At least one embodiment proposes to remove redundancy between these tools. At least one embodiment proposes to facilitate implementation of WP, GBI and possibly LIC by unifying the tools with a common syntax and process.

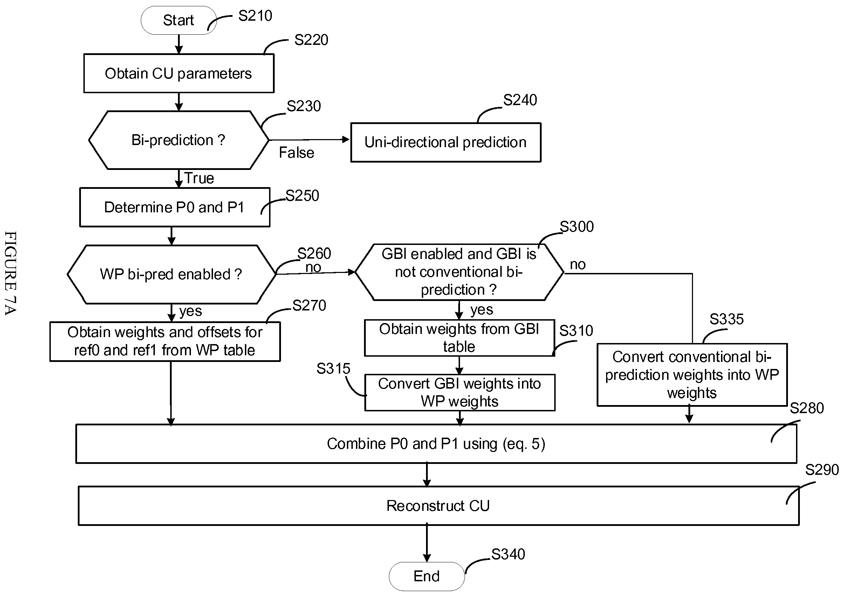

**Figure 7A** represents a flowchart of a method for decoding a CU/block from a bitstream according to a specific and non-limiting embodiment. The steps identical to the steps of Figure 6 are identified with the same numerical references and are not further detailed.

The method starts at step S210. CU parameters are obtained at S220, e.g. motion vectors, reference indices, coding modes, gbi_index, etc. In an embodiment, all parameters associated with a current CU are decoded. In a variant, only a subset of them (e.g. parameter indicating whether the current CU is bi-predicted) is decoded. As an example, High level Syntax (HLS) syntax elements are decoded. Sequence Parameters Set (SPS), Pictures Parameters Set (PPS) or Slice Header (SH) are examples of HLS. In an embodiment, flags gbi_enabled_flag, weighted_pred_flag and weighted_bipred_flag are decoded.

At S230, it is checked whether the CU is bi-predicted. If not, the method continues at S240 and uni-directional prediction applies.

In the case where the CU is bi-predicted, predictors P0 and P1 (S250) are determined. The predictor P0 is obtained by motion compensating a first reference block in a first reference image. The predictor P1 is obtained by motion compensating a second reference block in a second reference image. The motion vectors used for the motion compensation are decoded from the bitstream at S220.

In the case where WP bi-prediction is enabled (S260), e.g. weighted_bipred_flag is true, weights and offsets for ref0 and ref1 are obtained (S270) from a WP table. In case of WP, each reference picture of index "i" from each list (L0 and L1) may have different (weight[i], offset[i]) values. Consequently, ncomp x (nRef[0]+nRef[1]) (weight, offset) values may be encoded/decoded, and no additional weighting information is coded per CU (i.e. gbi_index or LIC flag are not coded), where ncomp is the number of components, nRef[0] is the number of reference pictures in L0 and nRef[1] is the number of reference pictures in L1. Usually, ncomp is equal to 3.

At S280, the predictors P0 and P1 are combined into a single predictor using equation 5.

In the case where WP bi-prediction is not enabled (S260), it is checked (S300) whether GBI is enabled, e.g. whether gbi_enabled_flag is true.

In the case where GBI is enabled and GBI is not conventional bi-prediction, e.g. gbi_index is different from 2, GBI weights are obtained (S310) from a GBI table (e.g. Table 1) using gbi_index. In case of GBI, all reference pictures share the same set of "num_gbi" (weight, offset) values. An index gbi_index is coded/decoded per CU in bi-prediction mode. The GBI weights are then converted (S315) into WP weights. Table 4 illustrates how GBI weights may be converted into WP weights. For each reference picture, the GBI parameters (weights) are specified as WP parameters (weights, offsets) (5 parameters sets per picture, indexed from 0 to 4).

In table 4, "num_gbi" WP weights, i.e. (weight, offset) values, are associated with each reference pictures of index "i" from each list (L0 and L1).

Table 4

| | | GBI indices (see Table 1) | | | | |
|---|---|---|---|---|---|---|
| List-0 | Ref-0 | 0 | 1 | 2 | 3 | 4 |
| | Ref-1 | 0 | 1 | 2 | 3 | 4 |
| | ... | 0 | 1 | 2 | 3 | 4 |
| List-1 | Ref-0 | 0 | 1 | 2 | 3 | 4 |
| | Ref-1 | 0 | 1 | 2 | 3 | 4 |
| | ... | 0 | 1 | 2 | 3 | 4 |

GBI weighting (eq.3) can be implemented with WP weighting (eq.5). The GBI weights are thus converted into WP weights using the following equations (eq.6a):

$$w0 = gw0[num\_gbi -1-gbi\_index]$$

$$w1 = gw1[gbi\_index]$$

off0 =1<<(gs[gbi_index]-1) and off1=0 or off0=0 and off1=1<< (gs[gbi_index]-1) shift = gs[gbi_index]

At S280, the predictors P0 and P1 are combined into a single predictor using equation 5.

In the case where conventional bi-prediction applies, conventional bi-prediction weights are converted into WP weights (S335) using the following equations (eq.6b):

w0 = 1 and w1 = 1
off0 = 1 and off1 = 0 or off0 = 0 and off1 = 1
shift = 1

The two predictors P0 and P1 are combined into a single predictor (S280) using equation 5. At S290, the CU is reconstructed. To this aim, residuals are decoded from the bitstream if not already decoded at S220. The residuals are added to the predictor to obtain the reconstructed CU.

The method ends at step S340.

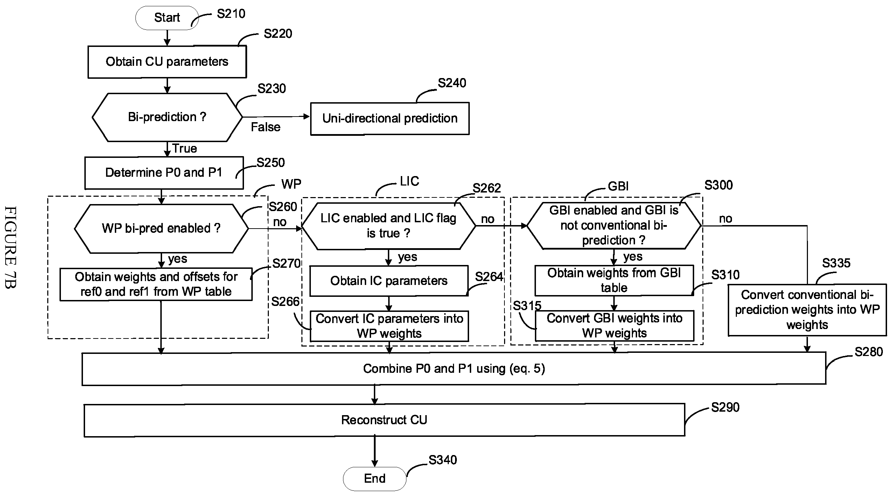

In a variant of Figure 7A depicted on Figure 7B, in the case where WP bi-prediction is not enabled (S260), it is first checked whether LIC is enabled. The steps identical to the steps of Figures 6 and 7A are identified with the same numerical references and are not further detailed. In the case where LIC is enabled and LIC flag is true (S262), LIC parameters (a0,b0), (a1,b1) are obtained (S264) and converted (S266) into WP weights. The LIC parameters (a0,b0),(a1,b1) (eq.8) are converted into WP weights (eq.5) as follows:

$$w0 = a0, w1 = a1, off01 = b0+b1+(1<<sh01), shift = sh01$$

In the case where LIC is not enabled or LIC flag is false (S262) the method continues at S300. In the Figure 7B, one of the two processing blocks "LIC" and "GBI" may be not present.

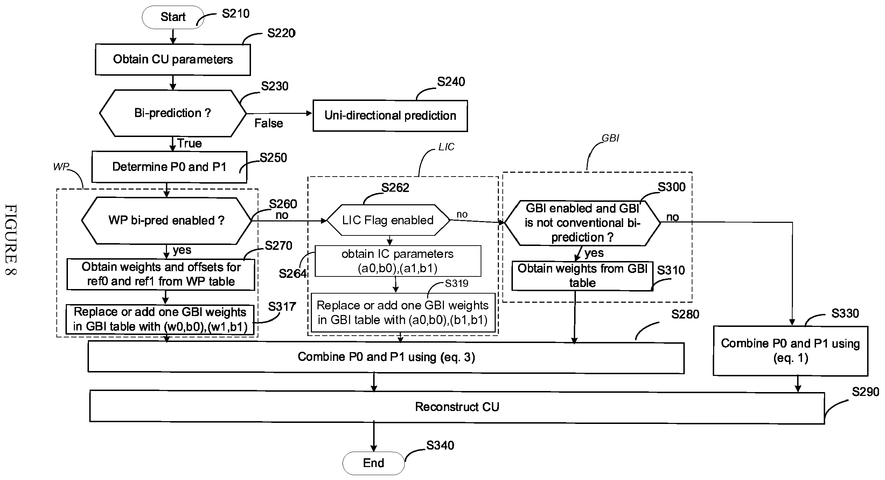

**Figure 8** represents a flowchart of a method for decoding a CU/block from a bitstream according to a specific and non-limiting embodiment. The steps identical to the steps of Figures 6 and 7A are identified with the same numerical references and are not further detailed.

In this embodiment, GBI is used to implement WP and possibly LIC. To this aim, WP weighting (eq.5) is implemented using GBI weighting (eq.3). In this case, WP weighted prediction parameters preferably replace the conventional bi-prediction parameters (e.g. gbi-index=2 in Table 1) of GBI table (S317), and one single GBI index (num_gbi=1) is defined as illustrated in Table 5.

Table 5

| GBI Index | $gw_0$ | $gw_1$ | off | gs | Binarization of GBI Index |
|---|---|---|---|---|---|
| 0 | - | - | - | - | - |
| 1 | - | - | - | - | - |
| 2 | w0 | w1 | (off0)+ off1 + 1 | shift | 1 |
| 3 | - | - | - | - | - |
| 4 | - | - | - | - | - |

In a more general design, another GBI index may be used to signal the WP weights. In this case, either the number of GBI weights is increased by 1 or the WP weights may replace an existing GBI weight (S317).

In this embodiment, GBI is used to implement LIC. To this aim, LIC weighting (eq.8) is implemented using GBI weighting (eq.3). Indeed, the (eq.8) is equivalent to (eq.3) with:

$$gw_0 = a_0$$

$$gw_1 = a_1$$

$$off = b_0 + b_1 + (1 << sh_{01})$$

$$gs = sh_{01} + 1$$

In the same way as proposed previously for WP, another GBI index "gbi-lic-index" may be used for signaling the use of LIC parameters at CU level. In this case, either the number of GBI weights is increased by 1 or the LIC weights can replace an existing GBI weight.

In another embodiment, GBI and LIC are both enabled, and (eq.3) is used. However, if LIC_flag = 1 then the GBI (weight,offset) values corresponding to conventional bi-prediction parameters are replaced with the LIC weights values as in the Table 9.

Table 9

| GBI Index | Weight value of $w_1$ | $gw_0$ | $gw_1$ | off | gs | Binarization of GBI Index |
|---|---|---|---|---|---|---|
| 0 | -1/4 | 5 | -1 | 2 | 2 | 0000 |
| 1 | 3/8 | 5 | 3 | 4 | 3 | 001 |
| 2 | - | a0 | a1 | (b0+ b1 + 1<<sh01) | sh01+1 | 1 |
| 3 | 5/8 | 3 | 5 | 4 | 3 | 01 |
| 4 | 5/4 | -1 | 5 | 2 | 2 | 0001 |

In a variant, in case of bi-prediction, the LIC-flag is no more encoded or inferred for the current CU. If the GBI index encoded or inferred for the current CU corresponds to the "gbi-lic-index", then the LIC process for determining LIC weights and offsets (a0,b0),(a1,b1) is invoked and the LIC weights are used in (eq.8). If the GBI index is not equal to "gbi-lic-index", then the regular GBI weights are used.

In another embodiment, GBI is used to implement bi-prediction LIC.

In yet another embodiment, the weight and offset values are stored in a set of 3D arrays (look-up-tables) and arranged as follows:

w0[c][i][g], w1[c][i][g], off0[c][i][g], off1[c][i][g], shift[c][i][g]

where c={0,.. ncomp} corresponds to the color components, i={L0,L1}, corresponds to the two reference pictures lists and g= {0,... (numGBI-1)} corresponds to the gbi_index, "ncomp=3" typically. It will be appreciated, however, that the present embodiments are not restricted to the use of LUT to store the weight and offset values. In the array, the determination of "gbi_index" from the index "g" can be made through a correspondence table "r(g)" ordering the "gbi_index" in the order of increasing binarization length (see Table 1). In the example of Table 1, r[]={2,3,1,4,0}. This will advantageously favor the index 2 that is in general more commonly selected, and also if the first dimension of the 3D LUT ("g" index) is inferior to "num-GBI".

Figures 6, 7A, 7B and 8 illustrates a decoding method according to various embodiments. The same embodiments may also apply on the encoder side.

In one embodiment WP syntax is extended to enable GBI. In the provided syntax example, elements in the bitstream are represented in **bold** type. Each syntax element is described by its name (all lower case letters with underscore characters), and one descriptor for its method of coded representation. The decoding process behaves according to the value of the syntax element and to the values of previously decoded syntax elements.

When **syntax_element** appears, it specifies that a syntax element is parsed from the bitstream and the bitstream pointer is advanced to the next position beyond the syntax element in the bitstream parsing process. Table 6 is a description of the WP syntax table adapted to handle GBI where (w0[i],b0[i]) for list L0 and for luma component is determined as :

w0[i] = delta_luma_weight_10[i] + (1 << luma_log2_weight_denom)
b0[i] = luma_offset_10[i]
sh0 = luma_log2_weight_denom

The amendments are indicated in italics. In PPS, the HLS is unchanged (Table 3, Table 6 - not in italics). To enable GBI only, one may have weighted_pred_flag = 0 (deactivation of adaptive weighting for uni-prediction) and weighted_bipred_flag = 1 (activation of adaptive weighting for bi-prediction).

The coding syntax for (weight,offsets) values in "pred_weight_table()" is modified by coding "num_gbi" plus additional loops for coding the weights associated to different "gbi_index" values (Table 6 - changes or new syntax indicated in italics). The new syntax enables to activate both WP and GBI. At CU level, the syntax element "gbi_index" is coded. If we want to enable WP only, "num_gbi" = 1 (i.e. g = 0). Since the same regular WP pair (wi;offi) is used for a given reference picture "i", then the "gbi_index" for signalling the usage of the WP parameters may have the same value (e.g. "2"), that is coded with one single bin value (see Table 1) so that the CABAC engine rapidly converge and the actual number of encoded bits is close to zero.

In a variant, if "num_gbi" is equal to "1", then the syntax element "gbi_index" is not coded. To enable GBI only, all the coded values verify the following conditions: i≠j:
delta_luma_weight_10[i][g]=delta_luma_weight_10[j][g] (w0[0][i][g]=w0[0][j][g]) luma_offset_10[i][g] = luma_offset_10[j][g] (off0[0][i][g] = off0[0][j][g]) delta_chroma_weight_10[i][c][g]=delta_chroma_weight_10[j][c][g](w0[c=1,2][i][g]= w0[c=1,2][j][g]), etc for 11.

One drawback of this method is that for GBI activation, one has to code "ncomp x (nRef[0]+nRef[1]) x num_gbi" whereas only "num_gbi" values are necessary. However, it has the advantage to support GBI and WP enabled together, so that the GBI (weight,offset) values may change for each picture reference "i". In addition, the overhead is rather limited as the signalling is typically per slice in worst case.

Table 6

| pred_weight_table( ) { | Descriptor |
|---|---|
| ***num_gbi*** | ue(v) |
| **luma_log2_weight_denom** | ue(v) |
| if(chroma_format_idc != 0) | |
| *for(g = 0; g <= num_gbi; g++)* | |
| **delta_chroma_log2_weight_denom***[g]* | se(v) |
| for(i = 0; i <= num_ref_idx_l0_active_minus1; i++) | |
| *for(g = 0; g <= num_gbi; g++)* | |
| **luma_weight_l0_flag**[i]*[g]* | u(1) |
| if(chroma_format_idc != 0) | |
| for(i = 0; i <= num_ref_idx_10_active_minus1; i++) | |
| *for(g = 0; g <= num_gbi; g++)* | |
| **chroma_weight_l0_flag**[i]*[g]* | u(1) |
| for(i = 0; i <= num_ref_idx_l0_active_minus1; i++){ | |
| *for(g = 0; g <= num_gbi; g++)* | |
| if(luma_weight_l0_flag[i]*[g]*){ | |
| **delta_luma_weight_l0**[i]*[g]* | se(v) |
| **luma_offset_l0**[i]*[g]* | se(v) |
| } | |
| if(chroma_weight_l0_flag[i]*[g]*) | |
| for(j = 0; j < 2; j++){ | |
| **delta_chroma_weight_l0**[i][j]*[g]* | se(v) |
| **delta_chroma_weight_l0**[i][j]*[g]* | se(v) |
| } | |
| } | |

(continued)

| pred_weight_table( ) { | Descriptor |
|---|---|
| if(slice_type == B){ | |
| for(i = 0; i <= num_ref_idx_l1_active_minus1; i++) | |
| *for(g = 0; g <= num_gbi; g++)* | |
| **luma_weight_l1_flag**[i]*[g]* | u(1) |
| if(chroma_format_idc != 0) | |
| for(i = 0; i <= num_ref_idx_l1_active_minus1; i++) | |
| *for(g = 0; g <= num_gbi; g++)* | |
| **chroma_weight_l1_flag**[i]*[g]* | u(1) |
| for(i = 0; i <= num_ref_idx_l1_active_minus1; i++){ | |
| *for(g = 0; g <= num_gbi; g++)* | |
| if(luma_weight_l1_flag[i]*[g]*){ | |
| **delta_luma_weight_l1_flag**[i]*[g]* | se(v) |
| **luma_offset_l1**[i]*[g]* | se(v) |
| } | |
| *for(g = 0; g <= num_gbi; g++)* | |
| if(chroma_weight_l1_flag[i]*[g]*) | |
| for(j = 0; j < 2; j++){ | |
| **delta_chroma_weight_l1_flag**[i][j]*[g]* | se(v) |
| **delta_chroma_offset_l1**[i][j]*[g]* | se(v) |
| } | |
| } | |
| } | |
| } | |

In another embodiment, WP syntax is extended to enable GBI with some restrictions on GBI. In order to avoid parsing too many (weight,offset) values, one can add restrictions on the number of parsed values when GBI is enabled ("num_gbi">1). One solution is to parse GBI (weight,offset) values only for one single reference and to copy these values for all the other reference pictures "i" (see syntax inserted at the end of Table 7).

In a variant "num gbi" is replaced by a flag. If flag=0, "num-gbi"=1, if flag=1 then "num_gbi" is equal to a given value (e.g. 5).

Table 7

| pred_weight_table( ) { |
|---|
| ***num_gbi*** |
| *if(num_gbi > 1) {* |
| *num_parse_ref_idx_l0_minus1 = 1* |
| *num_parse_ref_idx_l1_minus1 = 1* |
| ***}*** |
| ***else {*** |
| *num_parse_ref_idx_l0_minus1 = num_ref_idx_l0_active_minus1* |

(continued)

| |
|---|
| *num_parse_ref_idx_l1_minus1 = num_ref_idx_l1_active_minus1* |
| *}* |
| **luma_log2_weight_denom** |
| if(chroma_format_idc != 0) |
| *for(g = 0; g <= num_gbi; g++)* |
| **delta_chroma_log2_weight_denom***[g]* |
| for(i = 0; i <= num_parse_ref_idx_l0_active_minus1; i++) |
| *for(g = 0; g <= num_gbi; g++)* |
| **luma_weight_l0_flag**[i]*[g]* |
| if(chroma_format_idc != 0) |
| for(i = 0; i <= num_parse_ref_idx_l0_minus1; i++) |
| *for(g = 0; g <= num_gbi; g++)* |
| **chroma_weight_l0_flag**[i]*[g]* |
| for(i = 0; i <= num_parse_ref_idx_l0_minus1; i++) { |
| *for(g = 0; g <= num_gbi; g++)* |
| if(luma_weight_l0_flag[i]*[g]* |
| **delta_luma_weight_l0**[i]*[g]* |
| **luma_offset_l0**[i]*[g]* |
| } |
| if(chroma_weight_l0_flag[i]*[g]* |
| for(j = 0; j < 2; j++) { |
| **delta_chroma_weight_l0**[i][j]*[g]* |
| **delta_chroma_offset_l0**[i][j]*[g]* |
| } |
| } |
| if(slice_type == B) { |
| for(i = 0; i <= num_parse_ref_idx_l1_minus1; i++) |
| *for(g = 0; g <= num_gbi; g++)* |
| **luma_weight_l1_flag**[i]*[g]* |
| if(chroma_format_idc != 0) |
| for(i = 0; i <= num_parse_ref_idx_l1_minus1; i++) |
| *for(g = 0; g <= num_gbi; g++)* |
| **chroma_weight_l1_flag**[i]*[g]* |
| for(i = 0; i <= num_parse_ref_idx_l1_minus1; i++) { |
| *for(g = 0; g <= num_gbi; g++)* |
| if(luma_weight_l1_flag[i][g] { |
| **delta_luma_weight_l1**[i]*[g]* |
| **luma_offset_l1**[i] |
| } |

(continued)

| |
|---|
| for(g = 0; g <= num_gbi; g++) |
| if(chroma_weight_l1_flag[i][g]) |
| for(j = 0; j < 2; j++) { |
| **delta_chroma_weight_l1**[i][j]*[g]* |
| **delta_chroma_offset_l1**[i][j]*[g]* |
| } |
| } |
| } |
| |
| if(num_bgi > 1) { |
| for(i = 0; i <= num_ref_idx_l0_active_minus1; i++) { |
| for(g = 0; g <= num_gbi; g++) |
| luma_weight_l0_flag[i][g] = luma_weight_l0_flag[0][g] |
| chroma_weight_l0_flag[i][g] = chroma_weight_l0_flag[0][g] |
| delta_luma_weight_l0 [i][g] = delta_luma_weight_l0 [0][g] |
| luma_offset_l0 [i][g] = luma_offset_l0 [0][g] |
| delta_chroma_weight_l0 [i][g] = delta_chroma_weight_l0 [0][g] |
| delta_chroma_offset_l0 [i][g] = delta_chroma_offset_l0 [0][g] |
| } |
| for(i = 0; i <= num_ref_idx_l0_active_minus1; i++) { |
| for(g = 0; g <= num_gbi; g++) |
| luma_weight_l1_flag[i][g] = luma_weight_l1_flag[0][g] |
| chroma_weight_l1_flag[i][g] = chroma_weight_l1_flag[0][g] |
| delta_luma_weight_l1 [i][g] = delta_luma_weight_l1 [0][g] |
| luma_offset_l1 [i][g] = luma_offset_l1 [0][g] |
| delta_chroma_weight_l1 [i][g] = delta_chroma_weight_l1 [0][g] |
| delta_chroma_offset_l1 [i][g] = delta_chroma_offset_l1 [0][g] |
| } |
| } |
| } |

In a variant "num_gbi" is not coded but inferred to a value known by the decoder (e.g. "num_gbi"=5).

In another embodiment, a set of GBI weights and offsets are coded as mentioned in Table 8. In this case, to emulate WP behavior, the encoder may choose to fill these weights with the set of WP weights computed for each reference pictures. At CU level, the weights are selected from the table with the "gbi-index". In a variant, a flag "GBI_conventional_weights_flag" is coded. If "GBI_conventional_weights_flag" is true, then the GBI weights are weights defined, e.g. as in Table 1.

Table 8

| pred_weight_table( ) { | Descriptor |
|---|---|
| **GBI_conventional_weight_flag** | u(1) |

(continued)

| pred_weight_table( ) { | Descriptor |
|---|---|
| if(GBI_conventional_weights_flag) { | |
| *num_gbi* | ue(v) |
| *for(g = 0; g <= num_gbi; g++)* | |
| **shift0** | se(v) |
| **w0** | |
| **off0** | |
| **Shift1** | |
| **w1** | |
| **off1** | |
| } | |
| } | |
| } | |

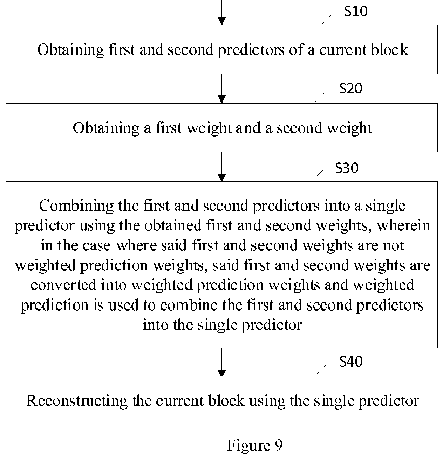

**Figure 9** depicts represents a flowchart of a method for decoding a CU/block from a bitstream according to a specific and non-limiting embodiment.

At S10, first and second predictors of a current block are obtained. At S20, at least a first weight and a second weight are obtained. At S30, the first and second predictors are combined into a single predictor using the obtained first and second weights. In the case where the first and second weights are not weighted prediction weights, the first and second weights are converted into weighted prediction weights and weighted prediction is used to combine the first and second predictors into the single predictor. At S40, the current block is reconstructed using the single predictor, e.g. by adding decoded residuals to the predictor.

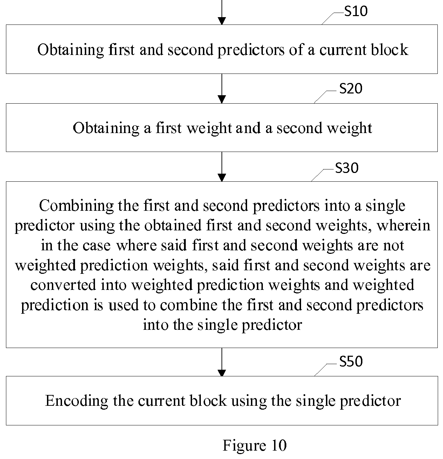

**Figure 10** depicts represents a flowchart of a method for encoding a CU/block in a bitstream according to a specific and non-limiting embodiment.

At S10, first and second predictors of a current block are obtained. At S20, at least a first weight and a second weight are obtained. At S30, the first and second predictors are combined into a single predictor using the obtained first and second weights. In the case where the first and second weights are not weighted prediction weights, the first and second weights are converted into weighted prediction weights and weighted prediction is used to combine the first and second predictors into the single predictor. At S50, the current block is encoded using the single predictor, e.g. by subtracting the predictor from the current block to obtain residuals.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

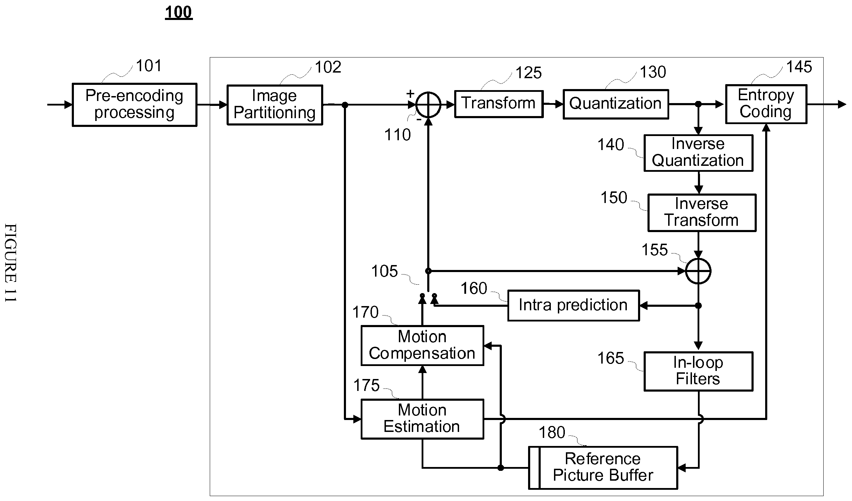

The aspects described and contemplated in this application can be implemented in many different forms. Figures 11, 12 and 13 below provide some embodiments, but other embodiments are contemplated and the discussion of Figures 11, 12 and 13 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

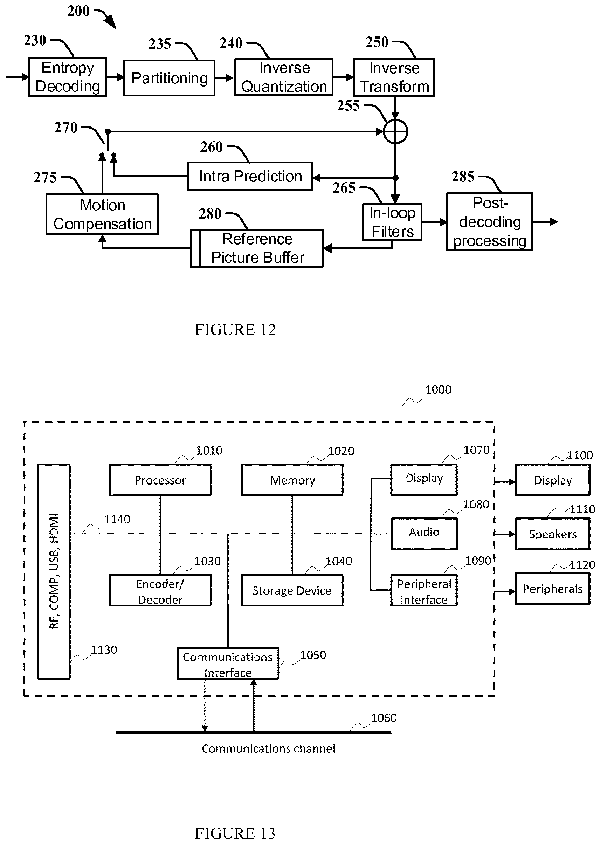

Various methods and other aspects described in this application can be used to modify modules, for example, the motion compensation, entropy coding, and/or decoding modules (145, 170, 230, 275), of a video encoder 100 and decoder 200 as shown in Figure 11 and Figure 12. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, num_gbi. The specific values are for example purposes and the aspects described are not limited to these specific values.

Figure 12 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 12 illustrates a block diagram of a video decoder 200. In the decoder 200, a bitstream is decoded by the decoder elements as described below. Video decoder 200 generally performs a decoding pass reciprocal to the encoding pass as described in Figure 11. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

Figure 13 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 13, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards. The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip. The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, converting generalized bi-prediction weights into weighted prediction weights.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, converting generalized bi-prediction weights into weighted prediction weights.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, gbi_index, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of GBI weights. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- Converting bi-prediction weights (e.g. generalized bi-prediction weights or LIC weights) into weighted prediction weights.
- Converting weighted prediction or LIC weights into generalized bi-prediction weights.
- Applying weighted prediction or generalized bi-prediction weights to combine the first and second predictors into the single predictor.
- Adapting bi-prediction at an encoder according to any of the embodiments discussed.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt bi-prediction in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs conversion of bi-prediction weights according to any of the embodiments described.
- A TV, set-top box, cell phone, tablet, or other electronic device that performs conversion of bi-prediction weights according to any of the embodiments described, and that displays (e.g. using a monitor, screen, or other type of display) a resulting image.

- A TV, set-top box, cell phone, tablet, or other electronic device that selects (e.g. using a tuner) a channel to receive a signal including an encoded image, and performs conversion of bi-prediction weights according to any of the embodiments described.
- A TV, set-top box, cell phone, tablet, or other electronic device that receives (e.g. using an antenna) a signal over the air that includes an encoded image, and performs conversion of bi-prediction weights according to any of the embodiments described.

According to a general aspect of at least one embodiment, a method for decoding video data is presented. The decoding method comprises:

- obtaining first and second predictors of a current block;
- obtaining at least a first weight and a second weight;
- combining the first and second predictors into a single predictor using the obtained first and second weights, wherein in the case where the first and second weights are not weighted prediction weights, the first and second weights are converted into weighted prediction weights and weighted prediction is used to combine the first and second predictors into the single predictor; and
- reconstructing the current block using the single predictor.

According to a general aspect of at least one embodiment, an apparatus for decoding video data is presented. The apparatus comprises one or more processors configured to perform:

- obtaining first and second predictors of a current block;
- obtaining at least a first weight and a second weight;
- combining the first and second predictors into a single predictor using the obtained first and second weights, wherein in the case where the first and second weights are not weighted prediction weights, the first and second weights are converted into weighted prediction weights and weighted prediction is used to combine the first and second predictors into the single predictor; and
- encoding the current block using the single predictor.

According to a general aspect of at least one embodiment, a method for encoding video data is presented. The encoding method comprises:

- obtaining first and second predictors of a current block;
- obtaining at least a first weight and a second weight;
- combining the first and second predictors into a single predictor using the obtained first and second weights, wherein in the case where the first and second weights are not weighted prediction weights, the first and second weights are converted into weighted prediction weights and weighted prediction is used to combine the first and second predictors into the single predictor; and
- encoding the current block using the single predictor.

According to a general aspect of at least one embodiment, an apparatus for encoding video data is presented. The apparatus comprises one or more processors configured to perform:

- obtaining first and second predictors of a current block;
- obtaining at least a first weight and a second weight;
- combining the first and second predictors into a single predictor using the obtained first and second weights, wherein in the case where the first and second weights are not weighted prediction weights, the first and second weights are converted into weighted prediction weights and weighted prediction is used to combine the first and second predictors into the single predictor; and
- encoding the current block using the single predictor.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above.

One or more embodiments also provide a computer program product including instructions for performing at least part of any of the methods described above.

In an embodiment, the first and second weights are generalized bi-prediction weights.

In an embodiment, the first and second weights are local illumination compensation weights.

In an embodiment, the first and second weights are conventional bi-prediction weights.


**Claims**

1. A decoding method comprising:

   - obtaining first and second predictors of a current block;
   - obtaining at least a first weight and a second weight;
   - combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
   - reconstructing the current block using the single predictor.

2. The decoding method according to claim 1, wherein said first and second weights are generalized bi-prediction weights.

3. The decoding method according to claim 1, wherein said first and second weights are local illumination compensation weights.

4. The decoding method according to claim 1, wherein said first and second weights are conventional bi-prediction weights.

5. An encoding method comprising:

   - obtaining first and second predictors of a current block;
   - obtaining at least a first weight and a second weight;
   - combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
   - encoding the current block using the single predictor.

6. The encoding method according to claim 5, wherein said first and second weights are generalized bi-prediction weights.

7. The encoding method according to claim 5, wherein said first and second weights are local illumination compensation weights.

8. The encoding method according to claim 5, wherein said first and second weights are conventional bi-prediction weights.

9. A decoding apparatus comprising one or more processors configured to perform:

   - obtaining first and second predictors of a current block;
   - obtaining at least a first weight and a second weight;
   - combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
   - reconstructing the current block using the single predictor.

10. The decoding apparatus according to claim 9, wherein said first and second weights are generalized bi-prediction weights.

11. The decoding apparatus according to claim 9, wherein said first and second weights are local illumination compensation weights.

12. The decoding apparatus according to claim 9, wherein said first and second weights are conventional bi-prediction weights.

13. An encoding apparatus comprising one or more processors configured to perform:

- obtaining first and second predictors of a current block;
- obtaining at least a first weight and a second weight;
- combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor; and
- encoding the current block using the single predictor.

14. The encoding apparatus according to claim 13, wherein said first and second weights are generalized bi-prediction weights.

15. The encoding apparatus according to claim 13, wherein said first and second weights are local illumination compensation weights.

16. The encoding apparatus according to claim 13, wherein said first and second weights are conventional bi-prediction weights.

Intra prediction reconstructed samples

current picture

current blk

reference 0    Inter prediction    current picture

MV0

ref blk 0

current blk

FIGURE 1 – PRIOR ART

reference 0

current picture

MV0

ref blk 0

L-shape

current blk

L-shape-ref0

L-shape-cur

FIGURE 2

L-shape

reference 0

current picture

reference 1

MV0

ref blk 0

MV1

current blk

ref blk 1

L-shape-ref0

L-shape-cur

L-shape-ref1

FIGURE 3

FIGURE 4

FIGURE 5

FIGURE 6

```
                    ┌─────────┐
                    │  Start  │───── S210
                    └────┬────┘
                         │                    ┌──── S220
              ┌──────────▼──────────┐
              │ Obtain CU parameters│
              └──────────┬──────────┘
                         │         ┌──── S230          ┌──── S240
                    ╱────▼─────╲              ┌─────────────────────────┐
                   ╱            ╲   False      │ Uni-directional prediction│
                  ⟨ Bi-prediction?⟩──────────▶│                         │
                   ╲            ╱              └─────────────────────────┘
                    ╲────┬─────╱
                         │ True
              ┌──────────▼──────────┐  S250
              │ Determine P0 and P1 │
              └──────────┬──────────┘
                         │                              ┌──── S300
                    ╱────▼─────╲   S260         ╱──────────────────╲
                   ╱            ╲   no          ╱ GBI enabled and GBI is╲   no
                  ⟨ WP bi-pred   ⟩────────────▶⟨  not conventional bi- ⟩─────────┐
                   ╲  enabled?   ╱              ╲     prediction?      ╱          │
                    ╲────┬─────╱                 ╲──────┬──────╱                 │
                         │ yes    ┌── S270               │ yes                    │
              ┌──────────▼──────────┐         ┌──────────▼──────────┐  S310       │
              │ Obtain weights and  │         │ Obtain weights from │             │
              │ offsets for ref0 and│         │ GBI table           │             │
              │ ref1 from WP table  │         └──────────┬──────────┘             │
              └──────────┬──────────┘                    │                 ┌─── S330
              ┌──────────▼──────────┐ S280     ┌─────────▼─────────┐ S320  ┌───────▼──────────┐
              │ Combine P0 and P1   │          │ Combine P0 and P1 │       │ Combine P0 and P1│
              │ using (eq. 5)       │          │ using (eq. 3)     │       │ using (eq. 1)    │
              └──────────┬──────────┘          └─────────┬─────────┘       └───────┬──────────┘
                         │        S290                   │                         │
        ┌────────────────▼─────────────────────────────────────────────────────────┘
        │                        Reconstruct CU
        └────────────────┬──────────────────────────────────────────────────────────
                         │
                    ┌────▼────┐
                    │   End   │───── S340
                    └─────────┘
```

FIGURE 7A

FIGURE 7B

Start — S210

Obtain CU parameters — S220

Bi-prediction ? — S230

False → Uni-directional prediction — S240

True

Determine P0 and P1 — S250

WP

WP bi-pred enabled ? — S260

no →

yes

Obtain weights and offsets for ref0 and ref1 from WP table — S270

S266

LIC

LIC enabled and LIC flag is true ? — S262

no →

yes

Obtain IC parameters — S264

Convert IC parameters into WP weights

GBI

GBI enabled and GBI is not conventional bi-prediction ? — S300

no →

yes

Obtain weights from GBI table — S310

S315

Convert GBI weights into WP weights

S335

Convert conventional bi-prediction weights into WP weights

Combine P0 and P1 using (eq. 5) — S280

Reconstruct CU — S290

End — S340

Start — S210

Obtain CU parameters — S220

Bi-prediction ? — S230

False → Uni-directional prediction — S240

True

Determine P0 and P1 — S250

WP bi-pred enabled ? — S260

yes → Obtain weights and offsets for ref0 and ref1 from WP table — S270

Replace or add one GBI weights in GBI table with (w0,b0),(w1,b1) — S317

no

LIC Flag enabled — S262

no

obtain IC parameters (a0,b0),(a1,b1) — S264

Replace or add one GBI weights in GBI table with (a0,b0),(a1,b1) — S319

GBI enabled and GBI is not conventional bi-prediction ? — S300

no

yes → Obtain weights from GBI table — S310

Combine P0 and P1 using (eq. 1) — S330

Combine P0 and P1 using (eq. 3) — S280

Reconstruct CU — S290

End — S340

FIGURE 8

30

```
                                                    ┌─S10
┌──────────────────────────────────────────────────────┐
│   Obtaining first and second predictors of a current block │
└──────────────────────────────────────────────────────┘
                                                    ┌─S20
┌──────────────────────────────────────────────────────┐
│      Obtaining a first weight and a second weight      │
└──────────────────────────────────────────────────────┘
                                                    ┌─S30
┌──────────────────────────────────────────────────────┐
│      Combining the first and second predictors into a single   │
│  predictor using the obtained first and second weights, wherein │
│    in the case where said first and second weights are not      │
│  weighted prediction weights, said first and second weights are │
│    converted into weighted prediction weights and weighted      │
│    prediction is used to combine the first and second predictors │
│                   into the single predictor                      │
└──────────────────────────────────────────────────────┘
                                                    ┌─S40
┌──────────────────────────────────────────────────────┐
│   Reconstructing the current block using the single predictor  │
└──────────────────────────────────────────────────────┘
```

Figure 9

—S10

Obtaining first and second predictors of a current block

—S20

Obtaining a first weight and a second weight

—S30

Combining the first and second predictors into a single predictor using the obtained first and second weights, wherein in the case where said first and second weights are not weighted prediction weights, said first and second weights are converted into weighted prediction weights and weighted prediction is used to combine the first and second predictors into the single predictor

—S50

Encoding the current block using the single predictor

Figure 10

FIGURE 11

**200**

**230**
Entropy
Decoding

**235**
Partitioning

**240**
Inverse
Quantization

**250**
Inverse
Transform

**255**

**270**

**260**
Intra Prediction

**265**

**275**
Motion
Compensation

**280**
Reference
Picture Buffer

In-loop
Filters

**285**
Post-
decoding
processing

FIGURE 12

**1000**

**1010**
Processor

**1020**
Memory

**1070**
Display

**1100**
Display

**1140**

**1080**
Audio

**1110**
Speakers

RF, COMP, USB, HDMI

**1030**
Encoder/
Decoder

**1040**
Storage Device

**1090**
Peripheral
Interface

**1120**
Peripherals

**1130**

**1050**
Communications
Interface

**1060**
Communications channel

FIGURE 13

34

**EUROPEAN SEARCH REPORT**

Europäisches Patentamt
European Patent Office
Office européen des brevets

Application Number

EP 18 30 6828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOSHI R ET AL: "HEVC Screen Content Coding Draft Text 4", 21. JCT-VC MEETING; 19-6-2015 - 26-6-2015; WARSAW; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-U1005-v2, 5 September 2015 (2015-09-05), XP030117647, * Subclauses 8.5.3.3.4.2, 8.5.3.3.4.3 * | 1,4,5,8, 9,12,13, 16 | INV. H04N19/70 H04N19/577 |
| X | BORDES (TECHNICOLOR) P: "Weighted Prediction", 97. MPEG MEETING; 18-7-2011 - 22-7-2011; TORINO; (MOTION PICTURE EXPERT GROUP OR ISO/IEC JTC1/SC29/WG11),, no. m20685, 18 July 2011 (2011-07-18), XP030049248, * the whole document * | 1,4,5,8, 9,12,13, 16 | |
| X | Y-C SU ET AL: "CE4-related: Generalized bi-prediction improvements combined from JVET-L0197 and JVET-L0296", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0646 7 October 2018 (2018-10-07), XP030195261, Retrieved from the Internet: URL:http://phenix.int-evry.fr/jvet/doc_end _user/documents/12_Macao/wg11/JVET-L0646-v 5.zip JVET-L0646_DraftText.docx [retrieved on 2018-10-07] * Subclauses 7.3.2.1, 7.3.4.5, 8.3.4.4 * | 1,2,5,6, 9,10,13, 14 | TECHNICAL FIELDS SEARCHED (IPC) H04N |

-/--

The present search report has been drawn up for all claims

| Place of search | Date of completion of the search | Examiner |
|---|---|---|
| Munich | 18 March 2019 | Bergmann, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y-C SU ET AL: "CE4-related: Generalized bi-prediction improvements combined from JVET-L0197 and JVET-L0296", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0646 7 October 2018 (2018-10-07), XP030195260, Retrieved from the Internet: URL:http://phenix.int-evry.fr/jvet/doc_end_user/documents/12_Macao/wg11/JVET-L0646-v5.zip JVET-L0646-v5.docx [retrieved on 2018-10-07] * abstract * * Introduction * ----- | 1,2,5,6, 9,10,13, 14 | |
| X | BORDES P ET AL: "Description of SDR, HDR and 360° video coding technology proposal by Qualcomm and Technicolor "" medium complexity version", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0022-v3, 12 April 2018 (2018-04-12), XP030151186, * Subclause 2.1.7.6 * ----- | 1,3,5,7, 9,11,13, 15 | TECHNICAL FIELDS SEARCHED (IPC) |

The present search report has been drawn up for all claims

| Place of search | Date of completion of the search | Examiner |
|---|---|---|
| Munich | 18 March 2019 | Bergmann, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)